# EUROPEAN PATENT APPLICATION

(11) **EP 2 076 081 A1**
(43) Date of publication of application: **01.07.2009**
(21) Application number: 08160015.7
(22) Date of filing: 09.07.2008
(51) Int. Cl.: H04W 52/02

(54) **Method for discontinuous reception in a mobile communication system**

(30) Priority: 24.12.2007 KR 20070136073
(71) Applicant: Electronics and Telecommunications Research Institute, Daejon-si 305-350 (KR); Samsung Electronics Co., Ltd, Suwon-si, Gyeonggi-do 442-742 (KR)
(72) Inventor: Park, Soon-gi, 305, Daejeon-si (KR); Kim, Hyung-sub, 138, Seoul (KR); Shin, Yeong-seung, 305, Daejeon-si (KR); Kim, Yeong-jin, 305, Daejeon-si (KR)
(74) Representative: Betten & Resch

(57) **Abstract**

The present invention relates to a technology that controls activation and/or inactivation of a wireless access module in order to reduce power consumption of a terminal in a mobile communication system.

Provided is a wireless access control method which is performed in a base station while a dedicated wireless channel with a mobile communication terminal is established, the wireless access control method comprising: determining whether to switch a data receiving mode of a corresponding mobile communication terminal between an activation mode and an inactivation mode after analyzing traffic characteristics of the mobile communication terminal; and transmitting one or more signals that include a command for shifting the data receiving mode of the mobile communication terminal and timing parameters related to a switching cycle.

## Description

### CROSS REFERENCE TO RELATED APPLICATIONS

This application claims priority from Korean Patent Application No. 10-2007-0136073, filed on December 24, 2007, the disclosure of which is incorporated herein in its entirety by reference.

### BACKGROUND OF THE INVENTION

### FIELD OF THE INVENTION

The present invention relates to an access control technology in a mobile communication system, and more particularly, to a technology which controls activation and inactivation of a wireless access module in order to reduce power consumption of a terminal.

This work was partly supported by the IT R&D program of Ministry of Information and Communication (MIC)/Institute for Information Technology Advancement (IITA) [2005-S-404-23, The adaptive DRX mechanism in UE Connected state]

### DESCRIPTION OF THE RELATED ART

Modes of access between a mobile communication terminal and a base station are classified into an idle state mode and an active state mode. In wideband code division multiple access (WCDMA), access state modes are categorized into CELL_DCH, CELL_FACH, CELL_PCH, and URA_PCH. Since the battery capacity of a mobile communication terminal is limited, the terminals keeps turning on and off power of a wireless access module in IDLE, CELL_PCH, and URA_PCH states, in which a dedicated access between the mobile communication terminal and the base station is not established, in order to reduce the power consumption. The mobile communication terminal is powered on at every predetermined period in a state where there is no dedicated wireless access to the base station, and monitors a particular downlink channel to check if there is a message from the base station and, if any, checks if the message is relevant to the terminal.

As services of mobile communication terminals have been changed from voice-based services to multimedia-traffic-based service, it is required to develop technologies for reducing power consumption even when a dedicated wireless access is established between the mobile communication terminal and a base station. For example, while a user is accessing a web page and a dedicated wireless access is being established between a mobile communication terminal and a base station, the user may read the same web page for a long time or may be doing a different job without disconnecting the access. In this case, the mobile communication terminal needs to maintain power-on a wireless access module even when there is no downlink traffic, thus causing a waste of battery power.

There is the conventional art for implementing discontinuous reception (DRX) when there is no dedicated access between a mobile communication terminal and a base station. According to the conventional art, a mobile communication terminal receives configuration information for a DRX service, which includes the length of DRX cycle, from a base station, sets the starting point of the DRX cycle as a starting time point of receiving an initial packet from the base station, and receives the packets from the base station from the starting time point during an activation period. Furthermore, the mobile communication terminal has a sleep period which has the end point of the activation period set as its starting time point and a point apart from the starting time point as far as the length of the DRX cycle as its end point, and goes into the sleep period to stand by to receive the packets.

However, according to the conventional art, since the starting and end points of the DRX cycle, as well as the sleep period, are fixed and Cell-specific (non-UE specific), it does not control the DRX cycle according to a traffic status of each UE with a dedicated access between a mobile communication terminals and a base station. Hence, the conventional art should be extended into the UE with a dedicated access and must consider the efficiency of power saving for traffic status of each UE (for example, if traffic is rare, the sleep period needs to be strengthened in order to enhance the efficiency of power saving).

### SUMMARY OF THE INVENTION

The present invention has been suggested to overcome the foregoing problems, and its object to provide an access control method in which a base station analyzes traffic characteristics between a mobile communication terminal and the base station and controls a wireless access state between the mobile communication terminal and the base station while a dedicated wireless access is being built, and thus can reduce power consumption of the mobile communication terminal.

Another object of the present invention is to reduce power consumption by controlling a wireless access state adaptively to traffic characteristics while a dedicated wireless access between a mobile communication terminal and a base station is being established.

Additional aspects of the invention will be set forth in the description which follows, and in part will be apparent from the description, or may be learned by practice of the invention.

The present invention discloses a wireless access control method which is performed in a base station while a dedicated wireless channel with a mobile communication terminal is established, the wireless access control method comprising: determining whether to switch a data receiving mode of a corresponding mobile communication terminal between an activation mode and an inactivation mode after analyzing traffic characteristics of the mobile communication terminal; and transmitting one or more signals that include a command for shifting the data receiving mode of the mobile communication terminal and timing parameters related to a switching cycle.

The one or more messages may be transmitted by a wireless network layer, which is a radio network layer (RNL), of the base station. Also, the one or more signals may be transmitted by a media access control (MAC) layer (L2) of the base station.

The determining whether to switch a data receiving mode may comprise receiving packet traffic information measured by the mobile communication terminal and determining whether to switch the data receiving mode of the corresponding mobile communication terminal between the activation mode and the inactivation mode based on the received packet traffic information.

The base station may first transmit parameters to be measured by the terminal.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.
FIG. 1 shows a mobile communication system to which to an access control method according to an exemplary embodiment of the present invention is applied.
FIG. 2 is a graph showing an amount of power consumption of a wireless access module in a mobile communication terminal according to time when the mobile communication terminal is in an idle mode, according to the prior art.
FIG. 3 are graphs, an upper graph showing the relation between data receipt speed of UE and time, which is measured in a base station when downlink data is provided from the base station to the UE while a dedicated channel is established there between, and a lower graph showing when a wireless access module of the UE is turned on and/or off while dedicated access is established in relation to the upper graph.
FIG. 4 is a view showing a framework related to a method of controlling an access mode which is implemented in the mobile communication system shown in FIG. 1.
FIG. 5 shows more detailed frameworks related to mode transition and mode management that can be implemented in the framework in FIG. 4.
FIGS. 6A - 6J are flowcharts schematically illustrating an access control method according to an embodiment of the present invention.
FIGS. 7A - 7F are flowchart schematically illustrating an access control method according to an embodiment of the present invention.

### DETAILED DESCRIPTION OF EXEMPLARY EMBODIMENTS

The attached drawings for illustrating preferred embodiments of the present invention are referred to in order to gain a sufficient understanding of the present invention, the merits thereof, and the objectives accomplished by the implementation of the present invention.

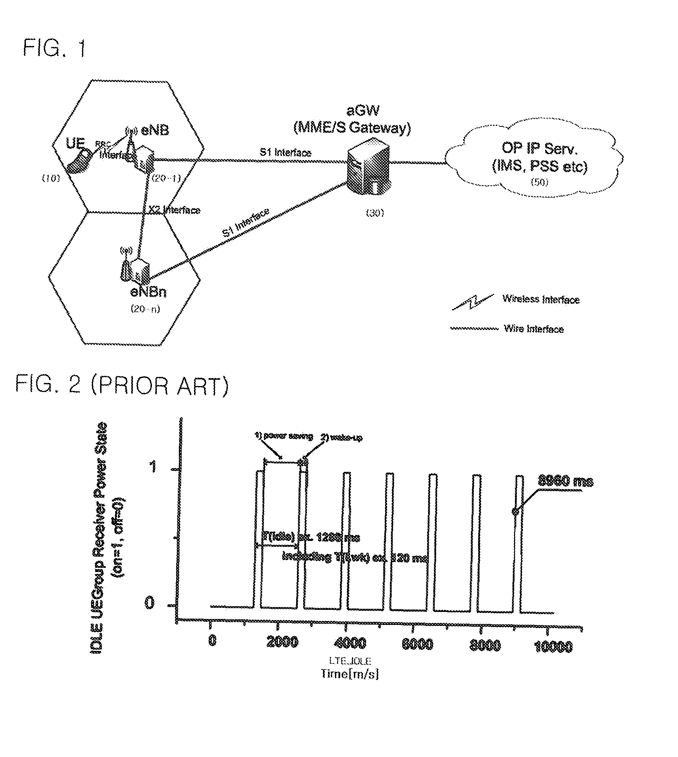

FIG. 1 shows a mobile communication system to which to an access control method according to an exemplary embodiment of the present invention is applied. Although the system in FIG. 1 is a 3GPP long term evolution (LTE) system, the present invention is not limited thereto and the method can be employed to a general mobile communication system.

In FIG. 1, reference characters 'eNB' 20-1 and 'eNBn' 20-n denote evolved NodeBs, which are base stations and are nodes similar to NodeB/RNC in wideband code division multiple access (WCDMA). An aGW 30 is an access gateway, which consists of a mobility management entity (MME) and a Serving Gateway (S-GW). The MME and the S-GW are nodes similar to SGSN and GGSN in WCDMA. An 'OP IP serv' 50 represents an operational IP service network, which includes an IP multimedia service, a packet-switched streaming service (PSS) and the like. An interface between eNodeB and the MME is referred to as an S 1 interface, an interface between eNodeBs is referred to as an X2 interface, and an interface between the eNodeB and a mobile communication terminal, that is, user equipment (UE) 10 is referred to as an RRC interface.

FIG. 2 is a graph showing an amount of power consumption of a wireless access module in a mobile communication terminal according to time when the mobile communication terminal is in an idle mode, according to the prior art. In LTE_IDLE mode, there is no logical dedicated wireless access between the mobile communication terminal and the base station eNB. In LTE_ACTIVE state mode, there is a logical dedicated wireless access between a mobile communication terminal and the base station eNB. According to the present invention, the 'dedicated wireless access' means an access which occupies a particular frequency, particular time, or a particular code, or which maintains a logical dedicated channel between a mobile communication terminal and a base station by allocating a particular wireless resource to the mobile communication terminal based on a scheduler regardless of a common physical channel between the mobile communication terminal and the base station.

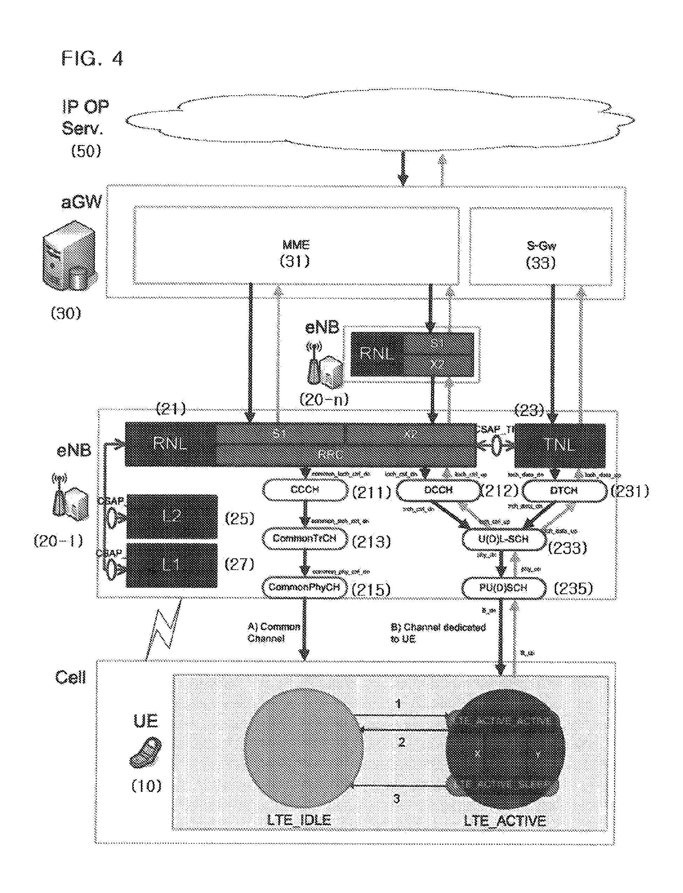

In the mobile communication system shown in FIG. 1, when the mobile communication terminal UE 10 belongs to a specific cell and the mobile communication terminal UE 10 is in an idle state, the mobile communication terminal UE 10 comes to belong to a particular mobile communication terminal group (IDLE UE Group) based on a unique number, for example, the last digit of international mobile subscriber identity (IMSI) number of the terminal. The mobile communication terminal UE 10 that is belonging to the particular group (IDLE USE Group) detects a time period T (idle) assigned to the particular group from information received from the base station eNB via the common channel in FIG. 4, and repeatedly wakes up for a duration of"T (i, wk) based on the time period T (idle) as shown in FIG. 2. If there is a message from the base station while the mobile communication terminal is waking up, the mobile communication terminal UE 10 parses the message. When it is determined that the message is relevant to the mobile communication terminal UE 10, the terminal UE does not repeat turning on and/or off a wireless access module, but maintains the wireless access module in a power-on state. Otherwise, the mobile communication terminal UE switches between power-on/off modes, in which the terminal UE repeatedly wakes up for a duration of T (i.wk), based on the time period T (idle). According to the present invention, the terms 'idle state' and 'off state' mean that states where there is no dedicated wireless access between the mobile communication terminal UE and the base station.

Also, in a 'power-on mode' or a 'waking-up' mode, the wireless access module of the mobile communication terminal UE is powered on and is operating in a normal mode.

In the conventional art, a UE group index of the mobile communication terminal is decided according to a unique identifier, for example, the last digit of IMSI, of the mobile communication terminal UE in a cell, and the mobile communication terminal UE receives information regarding a time period T (idle) and a duration of T (i.wk) corresponding to the UE group index. Mobile communication terminals having the same UE group index in the cell can reduce power consumption of batteries in power saving sections denoted by 1) in FIG. 2 by listening periodically to a common channel based on the same information such as T(idle) and T(i,wk) to correspond to the UE Group in a cell.

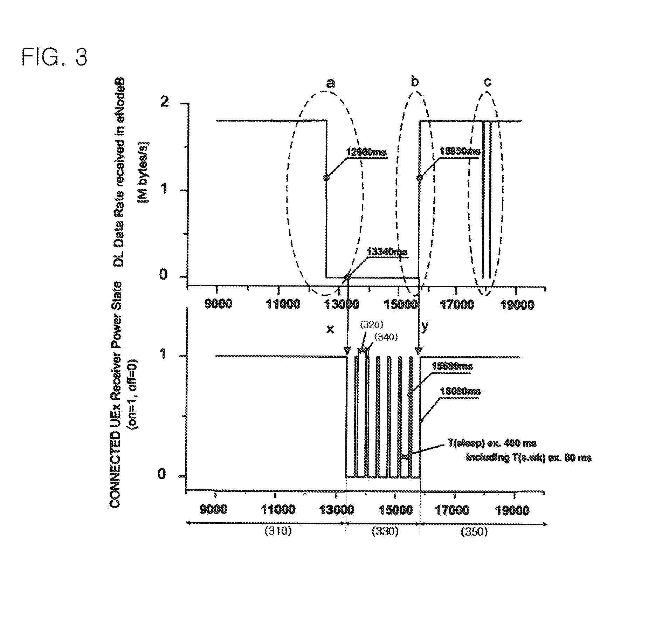

FIG. 3 are graphs, an upper graph showing the relation between data receipt speed of UE and time, which is measured in a base station when downlink data is provided from the base station to the UE while a dedicated channel is established there between, and a lower graph showing, in relation to the upper graph, when a wireless access module of the UE is turned on and off while dedicated access is maintained.

An LTE_ACTIVE mode can be defined as a mode in which a mobile communication terminal UE has a dedicated wireless access to a base station through layer 3 (L3) signaling. In the conventional LTE__ACTIVE mode, generally a wireless access module of a mobile communication terminal stays in a power-on state. However, in the course of downstream traffic transmission, there may be a time in which no downstream traffic transmission occurs. For example, in FIG. 3, at a time point of 12660 ms, which is surrounded by a dotted-line and denoted by 'a', there is no downstream generated. In this case, a base station checks such inactivity, and repeatedly turns on and off a receiver of the mobile communication terminal in a manner to wake up the receiver for a duration of T (s, wk) at each predetermined time period T (sleep) starting from a time point of 13340 ms until a time point of 16080 ms, so that power-saving can be achieved in such time durations, each of which is obtained by subtracting each wake-up time, that is, time duration T (s, wk) from each time interval T (sleep). Thus, in FIG. 3, power-saving can be achieved for (400 - 60) * 7 = 980 ms since the T(sleep) which has a vale of 0 occurs seven times.

According to the characteristic aspect of the present invention, the LTE_ACTIVE mode is defined as to include 'LTE_ACTTVE_ACTIVE' mode in which a wireless access module of a mobile communication terminal stays turned on, and 'LTE_ACTIVE_SLEEP' mode in which the power supply is blocked to the wireless access module of the mobile communication terminal in order to reduce power consumption.

In FIG. 3, at a section surrounded by a dotted-line denoted by 'b', in which downstream traffic occurs again at the time point of 15850 ms, the traffic is buffered in the base station. The occurrence of downstream traffic during a time period starting at 15680 ms, which is the sixth power-on period in FIG. 3, is not recognized by the mobile communication terminal. In a following activation period starting at 16080 ms, which is 400 ms later from the activation period starting at 15680 ms, the mobile communication terminal is shifted from the LTE_ACTIVE-SLEEP mode to the LTE_ACTIVE_ACTIVE mode, thereby turning on the wireless access module of the mobile communication terminal.

In a section surrounded by a dotted-line denoted by 'c', although inactivity of traffic occurs momentarily, this event does not meet relevant conditions for mode change, and thus mobile communication terminal does not go into the LTE_ACTIVE_SLEEP mode from the LTE_ACTIVE_ACTIVE mode.

According to the current embodiment of the present invention, a framework and a control method are implemented to control the shift of the mobile communication terminal between the LTE_ACTIVE_ACTIVE mode and the LTE_ACTIVE_SLEEP mode and dynamically control the time period T (sleep) and the time interval T (s, wk) by observing a traffic status while a dedicated wireless access channel is established between the mobile communication terminal and the base station.

FIG. 4 is a view showing a framework related to a method of controlling an access mode which is implemented in the mobile communication system shown in FIG. 1. Referring to FIG. 4, in the base station eNB 20-1, a radio network layer (RNL) 21 commonly indicates RRC (radio resource control), S1, and X2. Also, in the base station eNB 20-1, there are a physical layer L1, a media access control layer L2, and a transport network layer (TNL) which is a wireless access transport network layer that connects between a mobile communication terminal UE and a correspondent node (CN) such as a server for service traffic.

According to the conventional art, when a mobile communication terminal UE in a particular cell is in LTE_IDLE mode, a message of RNL for receiving call is transmitted to the mobile communication terminal UE from the base station over a communication channel in consideration of the time period T (idle) and the time interval T (i, wk) shown in FIG. 2. At this time, the channel between the mobile communication terminal UE and a base station is a common channel as represented by A) in FIG. 4. Thus, all mobile communication terminals UEs in the same cell listen to the common channel. For example, if terminals having the same last digit of IMSI are in the same cell, the terminals have the same DRX cycle (T (idle), T(i, wk)) as shown in FIG. 2, and wake up during the wake-up time, that is, T(i, wk) to check if there is a received message. When there is a received message, the terminals parse the message and if the message is relevant to a certain terminal, the corresponding terminal requests the initial access to the base station to establish a dedicated channel through random access. In LTE, such the common channel is defined as being composed of a logical channel referred to as CCCH 221, a transport channel referred to as CommonTrCh 213. and a physical channel referred to as CommonPhyCh 215. When the mobile communication terminal UE is in LTE_ACTIVE mode, a dedicated channel as denoted B) in FIG. 4 is established between the mobile communication terminal UE and the base station 20-1. According to the characteristic aspect of the present invention, the framework in LTE configuration includes logical channels including a dedicated control channel (DCCH) 221 that is mapped to RNL and a dedicated traffic channel (DTCH) 231 that is mapped to TNL. Both logical channels 212 and 231 are mapped to transport channels which include a pair 233 of an uplink shared channel (UL-SCH) and a downlink shared channel (DL-SCH), and the mapped channels are mapped to a pair 235 of a physical uplink shared channel (PUSCH) and a physical downlink shared channel (PDSCH), respectively, to form a logical dedicated channel. The logical dedicated channel B) is used for uplink and downlink transmission whereby RNL-RRC signals and traffic data are transmitted and received between the mobile communication terminal UE and the base station 20-1.

In a normal state, mode transitions of the mobile communication terminal UE between LTE_IDLE mode and LTE_ACTIVE_ACTIVE mode (represented by reference numerals 1 and 2 in FIG. 4), or from LTE_ACTIVE_SLEEP mode to LTE_IDLE mode (represented by reference numeral 3 in FIG. 4) are performed using messages between RNL (RRC) of the base station and L3 (RRC) of a mobile communication terminal. The transition of the mobile communication terminal between LTE_ACTIVE_ACTIVE mode and LTE_ACTIVE_SLEEP mode is determined by the base station in consideration of traffic characteristics, and the base station issues a command to the mobile communication terminal to transit between LTE_ACTIVE_ACTIVE mode and LTE_ACTIVE_SLEEP mode (X and Y in FIG. 4), and provides a time period T (sleep) and a time interval T (s, wk) for the LTE_ACTIVE_SLEEP mode.

In FIG. 4, CSAP denotes a control service access point. Over a logical channel CSAP-L2, RNL instructs L2 to configure L2 resources of a base station related to UE, or provides information regarding what to measure and measurement criteria to the mobile communication terminal UE, and then receives acknowledgement (ACK) information for configuration and measurement information based on measurement criteria. Similarly, over a logical channel CASP-L1, RNL instructs L1 to configure L1 resources, and L1 provides RNL with ACK information of configuration and measurement information with respect to the instruction. Furthermore, over a CSAP-TNL channel, a control of configuration of traffic is instructed to the RNL, and ACK information of each configuration and measurement regarding what to be measured and measurement criteria are provided to the RNL.

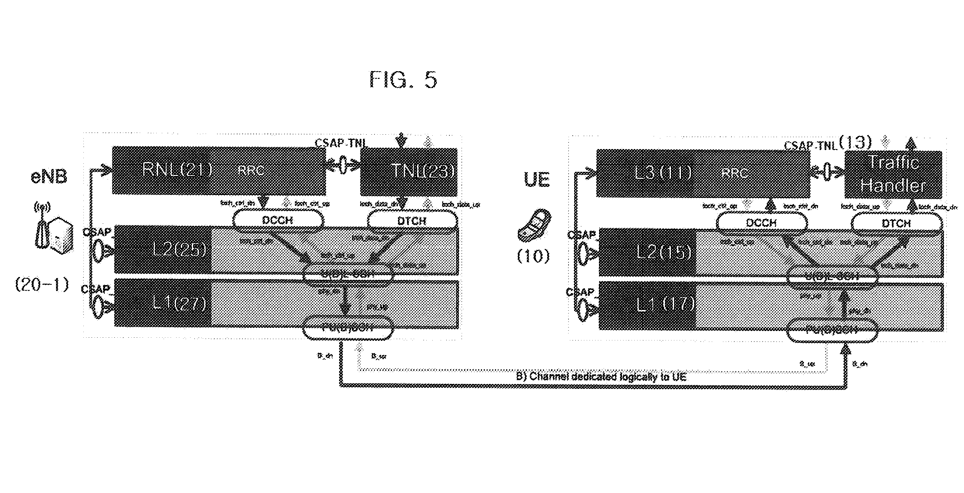

FIG. 5 shows more detailed frameworks related to mode transition and mode management that can be implemented in the framework in FIG. 4. Information regarding T(sleep) and T(s, k) from a base station to a mobile communication terminal UE can be transmitted by the use of an RRC message or be transmitted between L2 of UE and L2 of the base station. UE L3 RRC that has received an RNL-RRC message can control configuration of UE L2 and L1 and request measurement of UE L2 and L1 through a CSAP of the UE L3-RRC.

More specifically, referring to FIG. 5, a type A framework and a type B framework issue a mode transition command to switch UE from LTE_ACTIVE_ACTIVE to LTE_ACTIVE_SLEEP in order to enable DRX operation in a wireless dedicated access state as denoted by 330 in FIG. 3, and also manage X and Y mode transition by controlling the time period T(sleep) and the time interval T(s, wk) of DRX.

Main characteristics of the type A framework and type B framework differ from one another in that the type A framework uses messages between the base station RNL-RRC 21 and UE L3(RRC) 11 to perform the mode transition X and the mode transition Y and the type B framework uses messages between the base station RNL_R2 L2 25 and UE L2 15 for the mode transitions X and Y. In the type A framework, reliability of message transmission can be enhanced, whereas transmission of an L3 delivery message is slow, and in the type B framework, reliability of message transmission is lower than the type A framework, whereas transmission of an L2 signaling message is fast. The present invention can be implemented in consideration of how small the time period T (sleep) and the time interval T (s, wk) can be in real hardware, as well as in consideration of both advantages and disadvantages of above-described embodiments. The common characteristic of both types A and B frameworks is that the control of the time period T (sleep) and the time interval T (s, wk) for the transitions X and Y during DRX operation, such as the operation 330 in FIG.3, is performed in consideration of traffic characteristics measured in the base station (L2 and/or TNL).

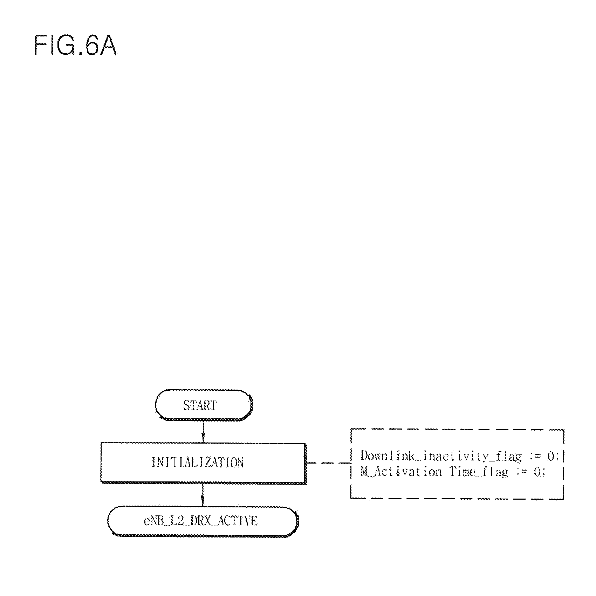

A wireless access control method of the type A framework according to an embodiment of the present invention will now be described. FIGS. 6A - 6J are flowcharts schematically illustrating an access control method according to an embodiment of the present invention. In the current embodiment, the wireless access control method is performed by a base station while a dedicated channel with a mobile communication terminal UE 10 is established. The wireless access control method includes operations of analyzing traffic characteristics to decide which data receiving mode a corresponding terminal UE goes into between an activation mode and an inactivation mode, and transmitting a command, which instructs the corresponding terminal UE to shift to a particular mode, and one or more massages, which include timing parameters related to a period of the mode shift.

The eNB RNL-RRC 21 decides parameters (T(sleep), T (s, wk), etc) for a DRX operation of UE and sends a message to UE L3-RRC to shift UE from LTE_ACTIVE_ACTIVE to LTE_ACTIVE_SLEEP, and the message includes the parameters for the DRX operation.

The eNB RNL-RRC 21 provides parameters (M ActivationTime, Tresolution, Tttt, Tmo, Tinactivity, TIATmargin, Tmo, Pattern, Repetition, and Report Method) to be measured with respect to traffic characteristics by the use of 1.1.1 signal of CSAP L2 channel. In this case, the parameters, as will be described below, also include MActivationTime, Tmo, Tinactivity, and so on. A layer 2 (L2) 25 which receives 1.1.1 signal of CSAP L2 channel reports on packet traffic information periodically and/or by an event trigger method by means of 1.2.1 signal of the CSAP_L2 channel with calculation result at every MActivationTime according to measurement conditions or a record method specified by the eNB RNL_RRC 21. As described later, the reported packet traffic Information includes the average value of arrival time intervals between samples of packets that arrive within specified time duration, and standard deviation value of the average value. When the eNB RNL-RRC 21 determines that a mode transition X or Y of the mobile communication terminal is needed according to the measurement report of 1.2.1 signal, mode transition is instructed to UE L3-RRC 11 by means of 2.1.1, 2.1.2 RRC signals of 2. B channel. Activation time of 2.1.1 signal is the time at which the mode is changed from LTE_ACTIVE_ACTIVE to LTE_ACTIVE_SLEEP, and when activation time value is 0, UE shifts its mode immediately, and when the activation time is any value other than 0, the mode transition takes place at the point of time indicated by the activation time. When looking at the actual X or Y transition inside UE, UE L3-RRC 11 that has received the instruction instructs the mobile communication terminal to do the mode transition X or Y using CSAP_UE-L2 channel 3.1.1, 3.1.2 signals. When UE L2 15 receives the 3.1.1, 3.1.2 signals for the mode transition, it responds to UE L3-RRC 11 through 3.2.1 signal in response to 3.1.1, 3.1.2 signals. The UE L3-RRC 11 that has received the response responds to 2.1.1, 2.1.2 RRC messages of eNB RNL-RRC 21 by means of an RRC message of 2.B channel 2.2.1. The eNB RNL-RRC 21 that receives the response provides information regarding mode transition of the mobile communication terminal through 1.1.2, 1.1.3 signals of CSAP_L2 channel. The eNB L2 that receives the information can respond to the 1.1.2, 1.1.3 signals using 1.2.2 signal over CSAP_L2 channel.

The signals used in the current embodiment are defined according to a layered structure, as follows:
1. eNB CASP_L2 channel: primitive definition between eNB RNL-RRC and eNB L2
   1.1 eNB RNL-RRC→ eNB L2 : CSAP_L2_Dn signal list
      1.1.1 CL2_Measurement_Control signal
         Tresolution, Tmo, Tinactivity, M ActivationTime, Tttt, Pattern,
         Repetition, ReportMethod, ReportInterval, alpha_coefficient
      1.1.2 CL2_TransitionInfoFromActiveActiveToActiveSleep signal
         Activation Time, Tsleep, Ts.wk, Pattern
      1.1.3 CL2_TransitionInfoActiveSleepToActiveActive signal
         Activation Time
   1.2 eNB L2 → eNB RNL-RRC : CSAP_L2_Up signal list
      1.2.1 CL2_Measurement_Report (L2-> RNL(RRC)) signal
         Event trigged(1A, 1D, IF) Report, Periodical Report,
         Mean(IAT)forTmo, Var(IAT)forTmo
      1.2.2 CL2_TransitionAck (x ack, y ack) signal
      1.2.3 CL2_TransitionRequestToLTE_IDLE signal
2. B channel: message definition between end RNL-RRC and UE L3 RRC :
   LOCH_CTRL channel from the viewpoint of eNB RNL-RRC
   2.1 eNB RNL-RRC -> UE L3-RRC : LOCH_CTRL_Dn signal list from the viewpoint of eNB RNL-RRC
      Transmission path : eNB RNL-RRC→loch_ctrl_dn→DCCH→trch_ctrl_dn→DL-
      SCH→phy_dn→PDSCH-B_dn→UE(B_dn)→PDSCH_phy_dn→DL-
      SCH→trch_ctrl_dn→trch_ctrl_dn→DCCH_loch_ctrl_dn→ UE L3-RRC
      2.1.1 RRC_TrasitionFromActiveActiveToActiveSleep signal
         Activation Time, Tsleep, Ts.wk, Pattern
   2.2 UE L3 RRC → eNB RNL-RRC : LOCH_CTRL_Up signal list from the viewpoint of eNB RNL-RRC
      Transmission path is in an opposite direction of 2.1 transmission path
      2.2.1 RRC_TransitionAck signal
         Normal receipt of message and completion of application (x ack ,y ack)
3. CSAP_DE_L2 channel: primitive definition between UE L3-RRC and UE L2
   3.1 UE 1.3-RRC → UE L2 signal list
      3.1.1 CL2_TransitionFromActiveActiveToActiveSleep signal
         Activation Time, Tsleep, Ts.wk, Pattern, Repetition.
      3.1.2 CL2_TransitionActiveSleepToActiveActive signal
         Activation Time
   3.2 UE L2 → UE L3-RRC signal list
      3.2.1 CL2_TransitionAck signal
         Normal receipt of primitive and completion of application (x ack, y ack)

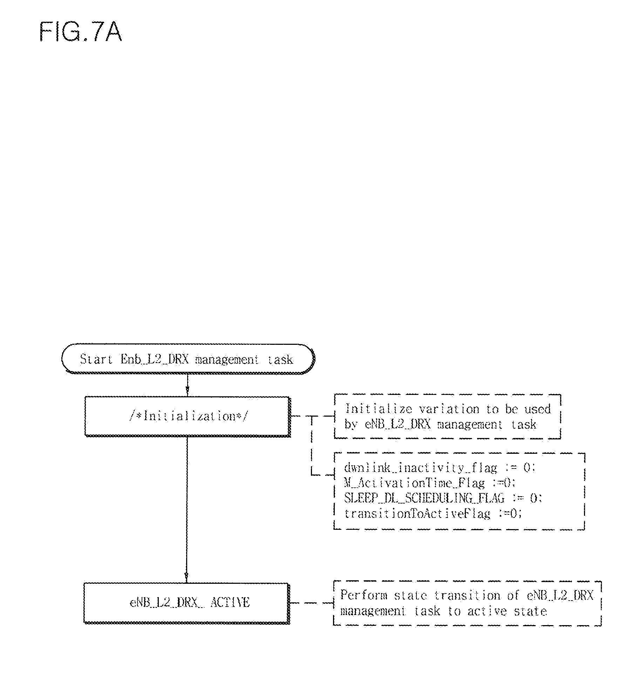

Next, a wireless access control method of the type B framework according to another embodiment of the present invention will now be described. FIGS. 7A - 7D are flowchart schematically illustrating an access control method according to an embodiment of the present invention. In the current embodiment, a mode transition of the mobile communication terminal, UE 10 between LTE_ACTIVE_ACTIVE mode and LTE_ACTIVE_SLEEP mode is controlled by a message which is transmitted between the eNB L2 25 and UE L2 15 over L1/L2 control channel or MAC control PDU using MAC-to-MAC mode.

In the current embodiment, a basic frame for signal transmission is the same as in the type A framework described above. However, signals to be used in the current embodiment are specified according to logical layers as follows.
1.CASP_L2 channel : primitive definition between eNB RNL-RRC and eNB L2
   1.1 eNB RNL-RRC → eNB L2 : CSAP_L2_Dn signal list
      1.1.1 CL2_Measurement_Control signal
         M Activation Time, Tresolution, Tttt, Tmo, Tinactivity,
         TIATmargin, Tmo, Pattern, Repetition
   1.2 eNB L2 → eNB RNL-RRC : CSAP_L2_Up signal list
      1.2.1 CL2_Mcasurement_Ack signal
         Normal receipt of primitive and primitive application completion(x ack,y ack)
2.B channel : Control PDU between eNB L2 and UE L2 or transmission path of signal definition between L2 dedicated channels : Control PDU or L2 dedicated channel along eNB L2→trch_ctrl_dn→DL-SCH→phy_dn→PDSCH→B_dn→UE(B_up)
   → PDSCF→phy_dn→DL-SCH→trch_ctrl_dn→trch_ctrl_dn→UE L2 can be used as a path : TRCH_CTRL channel from the viewpoint of eNB L2
   2.1 eNB L2 → UE L2 : LOCH_CTRL_Dn signal list from the viewpoint of eNB L2
      2.1.1 MACtoMAC_TrasitionFromActiveActiveToActiveSleep
         Tsleep (approximately 13 bits), Ts.wk (approximately 13 bits), Pattern (approximately 8 bits),
         ActivationTime
   2.2 UE L2 → eNB L2 : TRCH_CTRL_Up signal list from the viewpoint of eNB L2
      Control PDU or L2 dedicated channel is available as transmission path in a reverse form of 2 transmission path
      2.2.1 MACtoMAC_TrasitionAck signal
         Normal receipt by Control PDU and application completion (x ack, y ack) or base station can process ACK with respect to 2.1.1 and 2.1.2 using HARQ ACK

Types A and B of framework according to the current embodiments can be solely implemented or can be implemented by using both types A and B in a hybrid fashion in order to support power save of a mobile communication terminal in LTE_ACTIVE mode. For example, signals or message definition set in the type A framework can be used intact in the type B framework. In this case, not only eNB RNL_RRC but also eNB L2 can instruct mode transition X or Y. However, the framework can be designed to process the instruction of eNB RNL_RRC with priority.

Terms used for the above-described frameworks according to the embodiments of the present invention will now be defined.
a. Tresolution: minimum length of time which can be controlled in eNB L2 layer (for example, when 1 ms interrupt is processed in hardware, Tresolution = 1 ms) and can be managed by repeating time values such as MIN (Measurement Interval Number: 0 up to 4095) (for example, 0, 1, 2, ..., 4095, 0, 1, 2, .... 4095). If 1ms interrupt occurs and MIN is counted every 10 ms, MIN is counted up by one after 10 1ms interrupt occur, or if MIN is counted up every 1 ms, MIN is increased by one upon each occurrence of the 1ms interrupt. Such the MIN values become an Activation time that manages x or y transition time, an M Activation time which manages measurement time, and a reference unit time that manages LTE_ACTIVE_ACTIVE section and LTE_ACTIVE_SLEEP section. Tresolution is a minimum time for which L2 task can process a down-link packet and is a reference time for which IATi is measured. The maximum value of time management (in this case, 4095) can be set as a different value in accordance with the maximum period for power saving.
b. Tmo: an interval is for downstream packet measurement and always becomes a positive integral multiple of Tresolution. For instance, when Tresolution is 1 ms and n = 100, Tmo is 100 ms and the estimation time is 0.1 second. When n = 1, both of Tresolution and Tmo become I ms.
c. Tinactivity: immediately after B channel is opened by signaling between eNB RNL-RRC and UE L3-RRC, when INACTIVITY timer is set for Tinactivity duration and is used for mode transitions like 1 and 3 in FIG. 4, that is, from LTE_ACTIVE_ACTIVE state to LTE_IDLE and from LTE_ACTIVE_ACTIVE state to LTE_IDLE. Also the repetition of x and y transition like reference numeral 330 in FIG. 3 is determined based on values measured in L2, and the measurement values are described below.
d. M Activation Time: a measurement stating time point of eNB L2, when its value is 0, measurement is started at an instance of receiving relevant signal, otherwise at a time point where M Activation value and time management value, which is obtained from Tresolution, become the same each other, downstream traffic measurement is started. For example, if a time point of receiving signal is MIN = 200 and M Activation Time = 300, measurement is started 100 ms later.
e. Mean(IAT)forTmo: the mean of reciprocal arrival times of total samples of packets which arrive during Tmo.
f. Var(IAT)forTmo: standard deviation of total samples of packets arriving during the previous Tmo duration at the current measurement time point.
g. Tttt: a TimeToTrigger margin time value for preventing occurrence of event 1A due to instantaneous change in Mean(IAT)forTmo.
h. Mean(IAT)margin: an additional hysteresis mean margin value for Mean(IAT)forTmo to cause an event ID by reflecting sufficient change.
i. Mean(IAT)threshold: a threshold value for entering LTE_ACTTVE_SLEEP mode when a value of measured Mean(IAT)forTmo becomes greater than Mean(IAT)threshold.
j. definition of event - event ID hysteresis
   A case where a Mean(IAT)forTmo value at the current measurement time point becomes greater than a Mean(IAT)threshold + Delta(IAT)margin value.
k. definition of event - event 1A (Time-to-Trigger)
   A case where a Mean(IAT)forTmo value of the current measurement time point becomes smaller than a Mean(IAT)threshold value and then continuously smaller and smaller for a duration of Tttt.
l. Pattern: pattern is defined to be 8-bit, and consequently 256 patterns are created from 0, ..., 255. For example, in pattern 0, Tsleep may be fixed to an initially set value. Each of patterns 1 to 255 is defined in agreement between a base station and a mobile communication terminal according to traffic characteristics. For example, according to a pattern 1, in Tsleep * n, n may sequentially increase in the order of 1, 3, 5 and so on.
m. Repetition: for example, according to a pattern 1, when n is changed in the order of 1. 3, and 5 in Tsleep * n, repetition determines how many times Tsleep is to be repeated when n =1. For instance, repetition can be defined as 8-bit which has values (0..255). When the pattern 1 is used, a repetition value is 3 and a Tsleep initial value is 10 ms, changes of Tsleep is adjusted as 10, 10, 10, 30, 30, 30, 50, 50, 50,...
n. ReportMethod: a method by which the base station L2 reports L3, and when it is 0, the report is performed periodically, and alternatively when it is 1, the report is performed by an event trigger method.
o. ReportInterval: a time period of reporting of the base station L2 to L3 when ReportMethod is set as periodic.
p. Activation Time: a time point where mode transition X (from LTE_ACTIVE_ACTIVE to LTF_ACTIVE_SLEEP) or mode transition Y (the opposite of the mode transition X) starts.
q. alpha_coefficient: coefficient for comparing "Mean(IAT)forTmo * coefficient" measured at the current time to a Delta(ITA)forTmo value measured at the current time to observe regularity of IAT.
r. definition of event - Event I F distribution

Event 1 F occurs when a Delta(IAT)forTmmo value at the current time becomes smaller than "Mean(IAT)forTmo * coefficient" at the current time.

The essential points of the type A framework, the type B framework, or the hybrid of the type A and B frameworks are about how to determine the mode transition X or Y of the mobile communication terminal according to a traffic pattern, and about how to adjust Tsleep. FIG. 6A is a flowchart schematically illustrating initialization procedures in an access control method in a base station (hereinafter referred to as eNB L2) 20-1 according to the embodiment of the present invention. The initialization procedures occur immediately after establishment of a dedicated channel, that is, correspond to tasks generated in each corresponding UE immediately after the transition denoted by 1 in FIG. 4. In the current embodiment, the type A framework as described above is used. In FIG. 6A, it is specified that the eNB L2 20-1 has three modes including an eNB_L2_DRX_ACTIVE mode, and eNB_L2_DRX_ACTIVE_ACTIVE mode, and an eNB_L2_DRX_ACTIVE SLEEP mode.

As shown in FIG. 6A, when eNB L2 DRX management task begins and relevant variables are initialized, the base station 20-1 stays in eNB_L2_DRX_ACTIVE mode. In the course of initialization, downlink_inactivity_flag, downlink_toggle_flag, M_ActivationTime_flag are initialization. In the eNB_L2_DRX_ACTIVE mode, a transition of eNB_L2_DRX management task to an ACTIVE mode takes place.

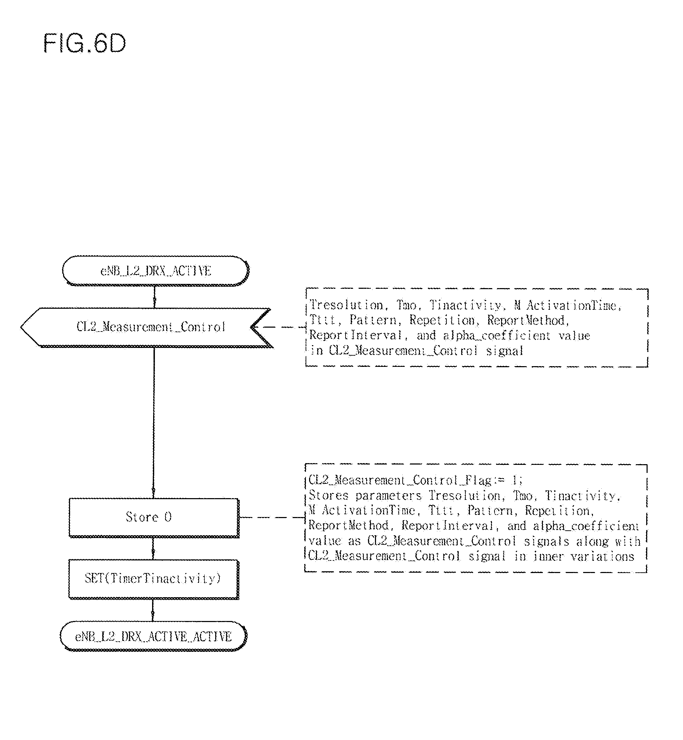

Referring to FIGS. 6D and 4, once a dedicated channel is established in FIG. 6A, a DRX task in eNB_L2_DRX-ACTIVE mode stores parameters included in a CL2_measurementControl received from eNB L3 RNL_RRC, drives TimerTinactivity, and goes into eNB_L2_DRX_ACTIVE_ACTIVE mode after UE shifts from LTE_IDLE state to LTE_ACTIVE state as shown in FIG. 4. Also, the flowchart of FIG. 6D can be applied to both the type A and type B frameworks.

During these procedures, the eNB L2 DRX task stores parameters from the received signal in an inner variable (store 0) and sets especially CL2_Measureanent_Control_Flag to 1. When this flag is 0, it means that the eNB L2 DEX task has not received CL2_MeasurementControl signal that indicates a measurement reference value with respect to a corresponding traffic characteristic in a session of a particular UE. Alternatively, when the flag is 1, it means that the session of the UE has received CL2_McasurcmentControl signal.

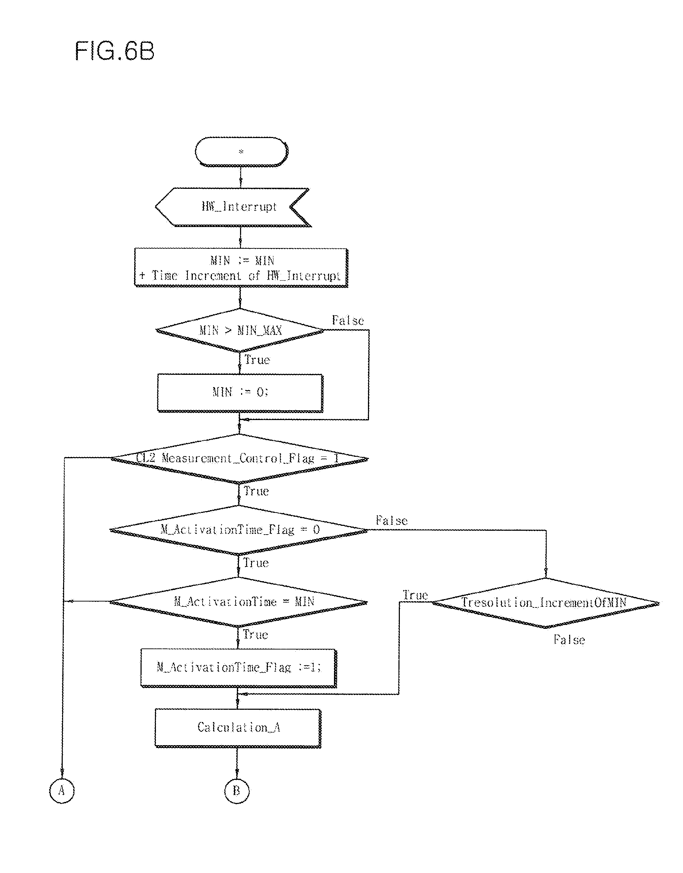

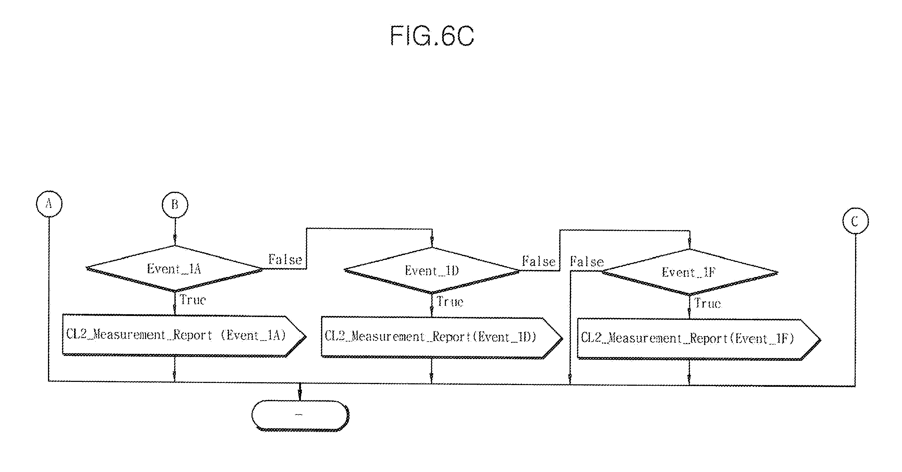

Referring to FIGS. 6B and 6C, the eNB L2 DRX task calculates time for each mode (eNB_L2_DRX_ACTIVE mode, an eNB_L2J3RX_ACTIVE_ACTIVE mode, and an eNB_L2_DRX_ACTIVE_SLEEP mode). For example, if an HW interrupt occurs at an interval of 1 ms, system clock can be managed by calculating MIN from 0 to 4095 in succession from the interrupt event. However, an HW interrupt is a general concept, and in implementation, MIN may be created by counting pluses generated by a clock or a set of clocks (for example, one MIN per 10hw interrupt). When assuming that MIN is known, it is checked if CL2_Measurement_Control_Flag is 1. The CL2_Measurement_Control_Flag indicates if eNB L2 DRX task has received CL2 _MeasurementControl signal with regard to a session of a corresponding UE at least once (referring to FIG. 6D). When CL2_measurement_Control_Flag is 1, it is checked whether M_ActivationTimeFlag is 0 or not. M_ActivationTimeFlag is a signal for examining if M_ActivationTime which is instructed by the CL2_measurement_Control signal has passed, and when it is 0, it indicates that M_ActivationTime has not passed. Alternatively, when M_ActivationTimeFlag is 1, it indicates that M_ActivationTime has passed. In other words, M_ActivationTime included in CL2_Measurement Control means a measurement starting time, and if M_ActivationTime is 1 at the present time, measurement can be initiated, or alternatively if M__ActivationTime is 0, it indicates that the measurement starting time has not been reached yet, so that measurement does not have to be started.

In FIGS. 6B and 6C, when M_ActivationTime is the same as MIN, M_ActivationTime_Flag is set to 1 and Calculation_A is obtained. When M_ActivationTime_Flag is set to 1, M_Activation_Flag comparison routine becomes False, and when a time reaches the increment time of Tresolution obtained from the CL2_measurement_Control signal in Tresolution_IncrementofMIN, the Calculation A is performed, or otherwise, the Calculation A is not performed. By means of Calculation_A, event 1A, event 1D. and event 1F are determined and which event has occurred is reported to eNB RNL-RRC through CL2_Measurement_Report signal. Calculation_A is obtained as follws:

### <Calculation_A>

Step 1. Mean(IAT)farTmo and Var(IAT)forTmo are obtained with respect to IATi between downlink packets which have been received since the previous Tmo until present.
Step 2. When Mean(IAT)forTmo is greater than Mean(IAT)threshold+Mean(IAT)margin, it is determine that Event 1D occurs.
Step 3. When Mean(IAT)forTmo is greater than Mean(IAT)threshold, TimeToTriggerFlag is set to 1. When Mean(IAT)forTmo is smaller than Mean(IAT)threshold, TimiToTriggerFlag is set to 0. TTT system time at a time point of setting TimeToTriggerFlag to 1 is recorded.
Step 4. When Tttt has passed from the system time recorded in step 3 and TimeToTriggerFlag is 1, it is determined that Event 1A occurs.
Step 5. When Delta(IAT)for Tmo at the current time becomes smaller than Mean(IAT)forTmo * alpha_coefficient, it is determined that Event 1F occurs.

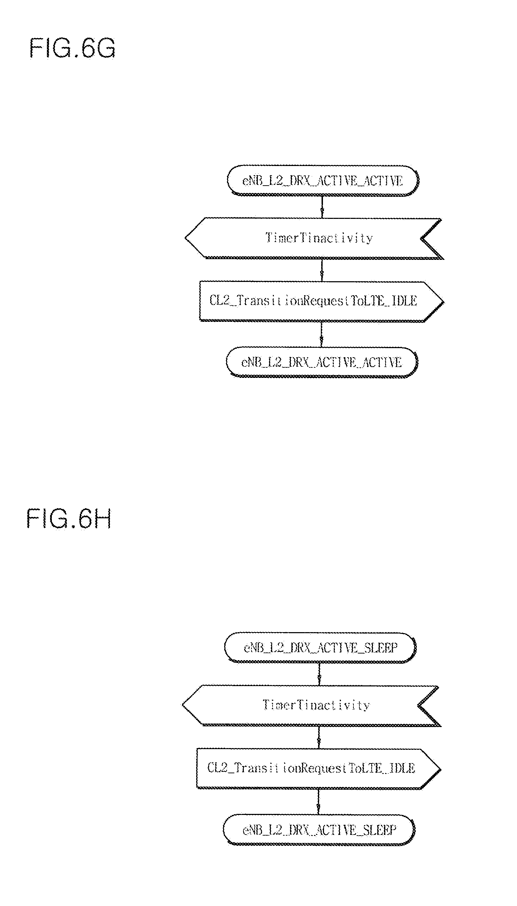

When eNB RNL-RRC receives Event. Mean(IAT)for Tmo, and Var(IAT)forFmo through CL2_MeasurementReport as shown in FIGS. 6B and 6C, eNB RNL-RRC provides information regarding mode transition of the mobile communication terminal to the mobile communication terminal using a signal such as CL2_TransitionInforFromActiveActiveToACtivcSleep or CL2_TransitionInfoFromActiveSleepToActiveACtive as shown in FIG. 6G, and the mobile communication terminal receives a command for a mode transition from eNB RNL-RRC through 2.1.1 and 2.1.2 signals over channel B) in FIG.5. When the eNB L2 DRX task receives CL2_TransitionIforFromActiveActiveToActiveSleep information,
SLEEP_DL_CHEDULEING_FLAG is set to 1, a downlink scheduler manages downlink packet in consideration of ActivationTime, Tsleep, Ts.wk, Pattern which are related to execution of Tsleep of the mobile communication terminal, and a transition to eNB_L2_DRX_ACTIVE_SLEEP mode takes place. For transition from eNB_L2_DRX_ACTIVE_SLEEP mode to eNB_L2 DRX_ACTIVE_ACTIVE mode, eNB RNL-RRC needs to receive CL2 _TransitionInfoFromActiveSleepToActiveSleep signal. When receiving the signal, the eNB RNL-RRC sets SLEEP_DL_SCHEDULING_FLAG to 0 such that the downlink scheduler notices that the mobile communication terminal becomes in LTE_ACTIVE_ACTIVE mode from ActivationTime and leaves a scheduling of a SLEEP mode.

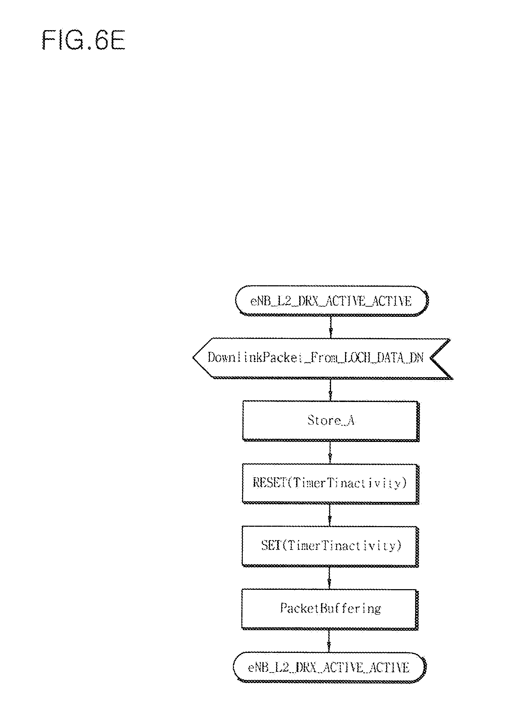

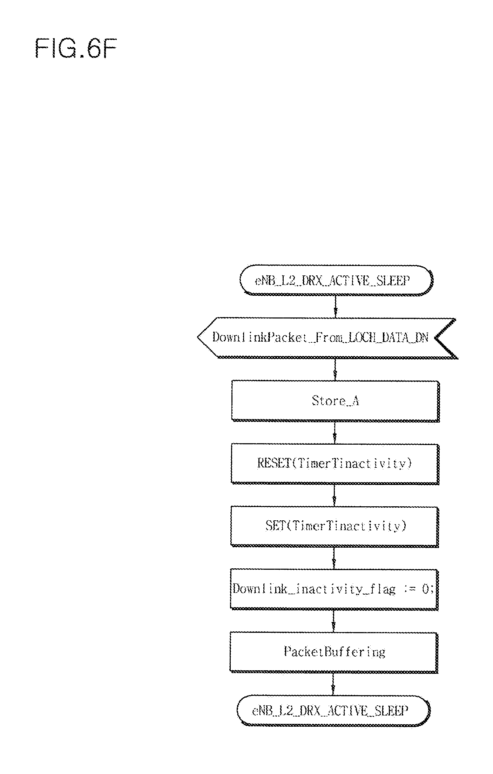

Referring to FIG. 4 again, a CL2_Measurement signal is sent from eNB_RNL_RRC to eNB L2 immediately after establishing a dedicated channel, downlink_inactivity_flag is initially set to 0 as shown in FIG. 6A, and when eNB CL2_MeasurementControl signal arrives as shown in FIG. 6D, the downlink_inactivity_flag is set to 1. At this time, parameters such as action of Store_0 included in CL2_MeasurementControl is stored and TimerTinactivity is activated according to Tinactivity time derived from the eNB CL2_MeasurementControl signal. As shown in FIGS. 6E and 6F, when the eNB DRX task is either in eNB_L2_DRX₋ACTIVE_ACTIVE or eNB_L2_DRX_ACTIVE_SLEEP mode and a downlink packet (DownlinkPacket_From_LOCH_DATA_DN) arrives, downlink_inactivity_flag is set to 1 and Store_A is performed in which stores inter arrival time (IAT) that is a difference between the previous packet stored time and the current packet stored time. Then, TimerTinactivity is reset, then the TimerTinactivity is set at a time point of receiving the downlink packet, and downlink_inactivity_flag is set to 0. In FIG. 6G, when a TimerTinactivity signal arrives at the base station in either eNB_L2_DRX ACTIVE_ACTIVE or eNB_L2_DRX_ACTIVE_SLEEP mode, in other words, when TimerTinactivity expires, CL2_TransitionRequestToLTE_IDLE signal is transmitted to eNB RNL-RRC if downlink_inactivity_flag is 0. That is, the flowcharts in FIGS. 6E and 6G show operations of the base station when the downlink packet simply arrives. The downlink packet is received in eNB_L2-DRX_ACTIVE_ACTIVE state or in eNB_L2_DRX_ACTIVE_SLEEP state, Store_A is performed (information of packet arriving time is stored), and a timer of TimerInactivity is reset and re-operated. Then the eNB RNL-RRC determines inactivity in consideration of other wireless channels of the corresponding mobile wireless channel, the eNB RNL-RRC generates a mode transition of the mobile communication terminal like 1 or 3 in FIG. 4 by exchanging messages with UE L3-RRC.

FIGS. 6G and 6H show flowcharts of procedures when the base station receives a signal indicating that the TimerInactivity expires. The eNB L2 requests the eNB RNL RRC to transit from LTE_ACTIVE_ACTIVE to LTE_IDLE (transition 2 in FIG. 4), or from LTE_ACTIVE_SLEEP to LTE_IDLE (transition 3 in FIG. 4). The eNB RNL RRC which receives the request performs procedures to remove a dedicated channel B by use of an RRC-RRC signal.

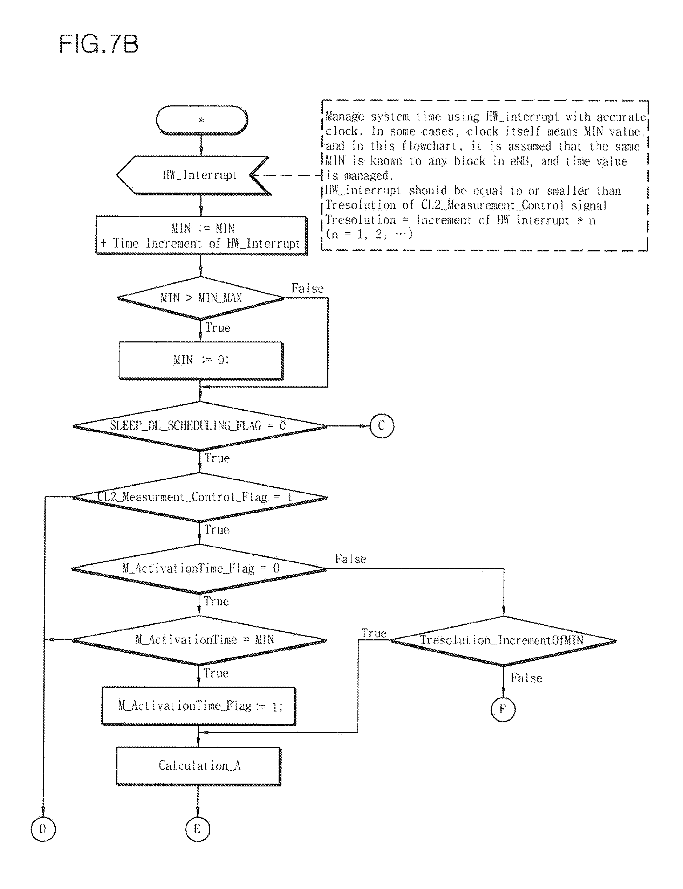

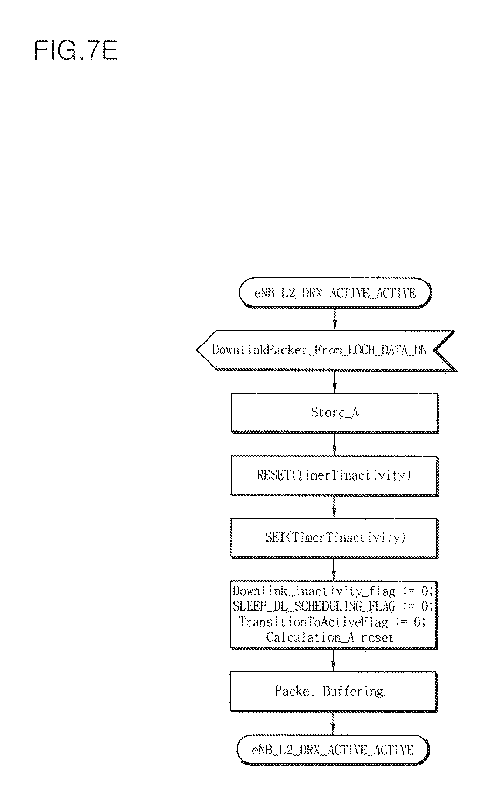

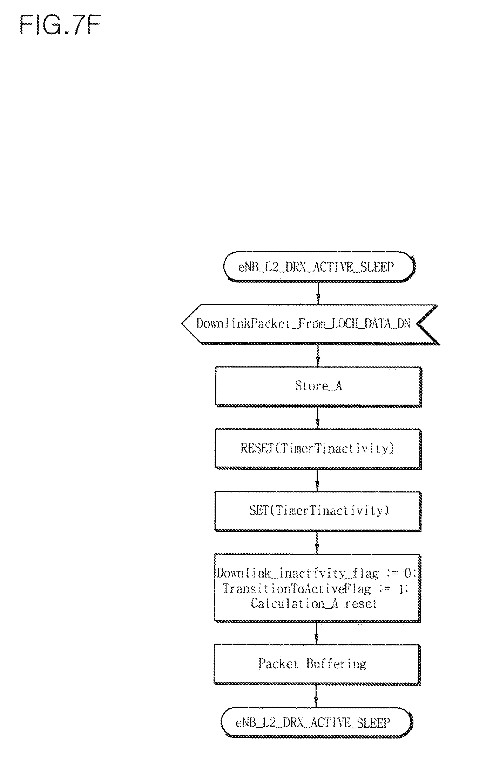

In the type B framework, transitionToActiveFlag, SLEEP_DL_SCHEDULING is added to the flowchart in FIG. 6A, and is set to 0 as shown in FIG. 7A, and procedures of FIGS. 7B - 7D and 7F substitute for the procedures of FIGS. 6B-6C and 6E, respectively without the procedures of FIG. 6F. TransitionToActiveFlag is 1 when downlink packet arrives in the course of DRX operation, or otherwise, TransitionToActiveFlag is 0. When Sleep_DL_Scheduling is 1, this means that UE is performing DRX operation and at the same time eNB L2 is performing status management according to the DRX operation. When SLEEP_DL_SCHEDULING is 0, this means there is no DRX operation. As illustrated in FIG. 7F, when DownlinkPacket_From LOCH_DATA_DN arrives at eNB L2 DRX task in eNB_L2_DRX_ACTIVE_SLEEP mode, transitionToActiveFlag is set to 1, and when downlink_inacktivity_flag := 0 and transitionToActiveFlag := 1, Calculation_A is reset and eNB_L2_DRX_ACTIVE_SLEEP mode is maintained. Procedures for return to Y mode by actually stopping the DRX operation are shown in FIGS. 7B-7D and 7F. If a downlink packet arrives and DRX operation is being performed, since SLEEP_DL_SCHEDULING is 1 and transitionToActiveFlag := 1, downlink packet moves to the very right of the framework in FIG. 5. At this time, when the downlink packet is Ts.wk, that is, in
eNB_L2_DRX_ACTIVE_ACTIVE, the downlink packet buffered to the channel B as shown in FIGS. 7E and 7F is transmitted to UE. When receiving the downlink packet, UE stops DRX and maintains LTE_ACTIVE_ACTIVE mode. In FIGS. 7B - 7D, when a value of SLEEP_DL_SCHEDULING_FLAG is 0, it means that DRX operation is not currently performed, and when a value is 1, it means that DRX operation such as 330 of FIG. 2 is being performed. In the eNB_L2_DRX_ACTIVE_ACTIVE mode with no DRX operation, eNB L2 is reported on the event, determines DRXDecision to decide whether or not to perform DRX management of the mobile communication terminal, and determines Tsleep, Ts.wk, and Pattern, sets SLEEP_DL_SCFIEDULING_FLAG to 1, and sends Tsleep, Ts.wk, and Pattern using MACtoMAC_TransitionFromActiveActiveToActiveSleep signal over the B_dn channel of FIG. 5. On the contrary, when a state of the eNB DRX task is SLEEP_DL_SCHEDULING_FLAG := 1 (eNB_L2_ACTIVE_SLEEP) and transitionToActiveFlag is 1, the current time is analyzed to find out if it is the same as Ts.wk and transitionToActiveFlag is set to 0, which means there is no downlink packet. At this time, since the DRX operation is in process, the state changes of UE need to be observed carefully and the base station should fully recognize the on/off states of UE depending on DRX. Referring to FIGS. 7B - 7D, eNB L2 DRX task goes to eNB_L2_DRX_ACTIVE_ACTIVE at a starting point of Ts.wk, and maintains eNB_DRX_ACTIVE_SLEEP at a next point of the end of Ts.wk such that the state of the base station can be maintained to be in accordance with the DRX operation of the mobile communication terminal.

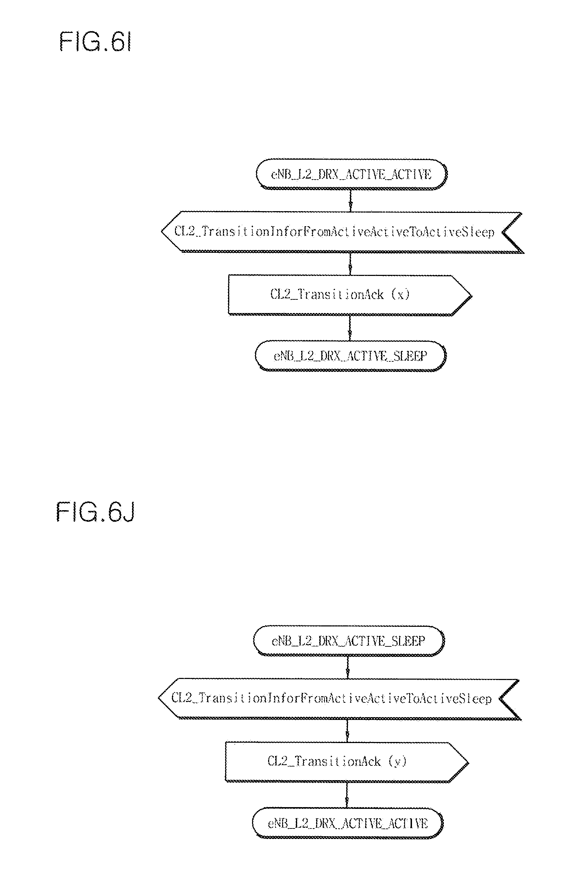

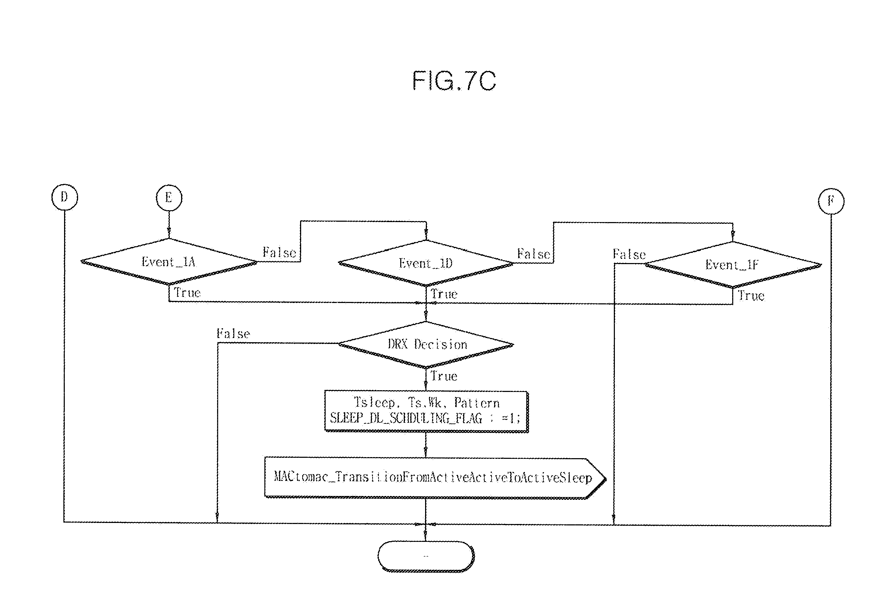

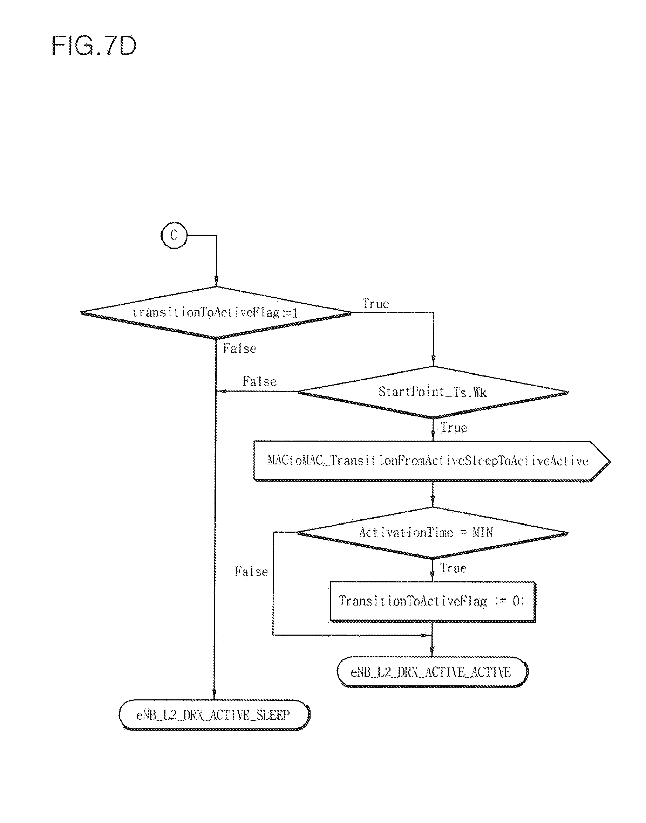

FIGS. 6 and 6J are flowcharts showing how the eNB RNL RRC controls the X and Y mode transition of the eNB L2 continuously in order for the base station to manage UE DEX operation processing status like 330 in FIG. 3. The operations in FIGS. 6I and 6J can be modified in a manner that, like in FIGS. 7B - 7D, the eNB RNL RRC provides parameters for DRX operation, as like the reference numeral 330 in FIG. 3, and the L2 manages the X and Y mode transition by itself. In other words, these are different from FIG. 7 in that the DRX operation of L2 is not controlled by eNB RNL_RRC but by the eNB L2 itself, and thus the event is not reported to the eNB RNL RRC.

FIG. 6E based on the type A framework is different from FIG. 7F based on the type B framework are different from each other in that when the eNB L2 DRX task in the eNB_L2_DRX_ACTIVE_SLEEP mode receives DownlinkPacket_From_LOCH_DATA_DN packet, the eNB L2 DRX task sets transitionToActiveFlag to 0, resets Calculation_A, and store downlink packets. Since the MACtoMAC_FrasitionFromActiveSleepToActiveActive includes ActivationTime, a time point of entering LTE_ACTIVE_ACTIVE can be matched between the mobile communication terminal and the base station.

Standard and method of the transition X which has been missed out from the flowchart will be described below, which can be applied to eNB RNL-RRC of the type A framework and eNB L2 of the type B framework.

Event_1F occurrence: by means of persistent scheduling, Tsleep is set to a value around Meau(IAT)forTmo, both pattern and repetition are set to 0 so that it is set that there is no pattern and no repetition.

Event_1A occurrence: by means of dynamic scheduling, Tsleep is set to a value around Mean(IAT)forTmo, pattern is set to have a value, and repetition is set to have a large value (that is, a period of Tsleep increases slowly).

Event_1D occurrence: by means of dynamic scheduling, Tsleep is set to a value around Mean(IAT)forTmo, pattern is set to have a value, and repetition is set to have a small value (that is, a period of Tsleep increases quickly).

Difference between the type A framework used in the flowchart in FIGS. 6A to 6J and the type B framework can be overcome by replacing the flowcharts of FIGS. 6B - 6C with the flowcharts of FIG. 7B -7D and removing the flowcharts of FIGS. 6I and 6J. The difference is that the substantial transition X or Y of a mobile communication terminal is decided by a MAC-to-MAC signal or RRC-to-RRC signal.

According to the present invention, when there is a dedicated wireless access between a mobile communication terminal and a base station, the base station controls a period of turning on/off the power of a receiver of the mobile communication terminal according to characteristics of downstream traffic, thus reducing the power consumption of the mobile communication terminal.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

## Claims

1. A wireless access control method which is performed in a base station while a dedicated wireless channel with a mobile communication terminal is established, the wireless access control method comprising:
determining whether to switch a data receiving mode of a corresponding mobile communication terminal between an activation mode and an inactivation mode after analyzing traffic characteristics of the mobile communication terminal; and
transmitting one or more signals that include a command for shifting the data receiving mode of the mobile communication terminal and timing parameters related to a switching cycle.

2. The wireless access control method of claim 1, wherein in the transmitting of one or more signals, the one or more messages are transmitted by a wireless network layer, which is a radio network layer (RNL), of the base station.

3. The wireless access control method of claim 1, wherein in the transmitting of one or more signals, the one or more signals are transmitted by a media access control (MAC) layer (L2) of the base station.

4. The wireless access control method of claim 1, wherein the determining whether to switch a data receiving mode comprises receiving packet traffic information measured by the mobile communication terminal and determining whether to switch the data receiving mode of the corresponding mobile communication terminal between the activation mode and the inactivation mode based on the received packet traffic information.

5. The wireless access control method of claim 4, wherein the packet traffic Information includes the mean of arrival time intervals of samples of packets received during a predetermined period of time and a standard deviation of the mean.

6. The wireless access control method of claim 4, wherein the determining of whether to switch the data receiving mode further includes receiving parameters to be measured by the wireless communication terminal before receiving the packet traffic information.

7. The wireless access control method of claim 6, wherein the parameters include a measurement starting time point value (M ActivationTime), a packet characteristic observation cycle value (Tmo), and an activation-state shifting threshold (Tinactivity).

8. The wireless access control method of claim 1, wherein in the transmitting of the one or more messages, the one or more messages are transmitted by a physical layer and a MAC layer of the base station.

9. A wireless access control method which is performed by a mobile communication terminal while a wireless channel with a base station is established, the wireless access control method comprising:
receiving measurement related parameters from the base station;
measuring packet traffic according to the received parameter;
sending information regarding measured packet traffic to the base station;
receiving a mode switch command for switching between an activation mode and an inactivation mode; and
transiting a state according to information included in the received command.

10. The wireless access control method of claim 9, wherein in the receiving of the mode switch command, the mode switch command includes timing parameters related to a switching cycle.

11. The wireless access control method of claim 6, wherein in the receiving of the measurement related parameters include a measurement starting time point value (M ActivationTime), a packet characteristic observation cycle value (Tmo), and an activation-state shifting threshold (Tinactivity).
